(19) Europäisches Patentamt
European Patent Office
Office européen des brevets

(11) Numéro de publication : **0 170 591**
**B1**

(12) **FASCICULE DE BREVET EUROPÉEN**

(45) Date de publication du fascicule du brevet : **05.04.89**

(51) Int. Cl.⁴ : **C 08 G 73/10**, H 01 B 3/30

(21) Numéro de dépôt : **85401502.1**

(22) Date de dépôt : **22.07.85**

(54) **Procédé de préparation de compositions de précurseurs de polyimides.**

(30) Priorité : **25.07.84 FR 8411842**

(43) Date de publication de la demande : **05.02.86 Bulletin 86/06**

(45) Mention de la délivrance du brevet : **05.04.89 Bulletin 89/14**

(84) Etats contractants désignés : **BE DE GB IT NL**

(56) Documents cités :
**FR-A- 1 422 458**
**FR-A- 1 565 555**
**FR-A- 2 000 824**
**FR-A- 2 269 557**
**Le dossier contient des informations techniques présentées postérieurement au dépôt de la demande et ne figurant pas dans le présent fascicule.**

(73) Titulaire : **CENTRE D'ETUDE DES MATERIAUX ORGANIQUES POUR TECHNOLOGIES AVANCEES**
**Autoroute Lyon-Vienne Echangeur de Solaize Vernaison Solaize**
**F-69390 Vernaison (FR)**

(72) Inventeur : **Rabilloud, Guy**
**27, Boulevard Clémenceau**
**F-38100 Grenoble (FR)**
Inventeur : **Mariaggi, Paul**
**La Rivoire 3**
**F-38200 Seyssuel (FR)**
Inventeur : **Gonzalez, Serge**
**Résidence "Clos du Pensionnat" Batiment B**
**69150 Decines (FR)**
Inventeur : **Sillion, Bernard**
**93, rue Juliot Curie**
**F-69005 Lyon (FR)**

(74) Mandataire : **Colas des Francs, Jean**
**Institut Français du Pétrole 4, Avenue de Bois Préau**
**F-92502 Rueil-Malmaison (FR)**

**EP 0 170 591 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un procédé de préparation de compositions résineuses de précurseurs de polyimides thermostables, utilisables pour la réalisation de revêtements isolants, de films et pour l'émaillage des conducteurs électriques ou magnétiques et consistant plus particulièrement en des compositions de polyamide-acides α,ω-diaminotéléchéliques stœchiométriquement associés à un réactif à effet retard, qui agit au moment de la mise en œuvre pour donner des polyimides de haute masse moléculaire. Elle concerne en outre les compositions résineuses obtenues.

Elle concerne également l'utilisation de ces compositions comme revêtements isolants pour la protection de métaux comme le fer, l'acier, l'aluminium, le cuivre, le laiton, le cuivre nickelé, divers alliages métalliques, le silicium, le germanium, le titane. Elle concerne aussi l'utilisation plus particulière de ces compositions pour l'émaillage des conducteurs métalliques et l'imprégnation des bobinages de fil émaillé.

On sait que les polyimides aromatiques présentent un ensemble de propriétés mécaniques et thermiques exceptionnelles dès lors qu'il s'agit d'utilisations en service continu au-dessus de 200 °C. Ces polymères connaissent un développement important sous forme de films ou de vernis isolants ayant une remarquable stabilité thermique (au moins 10 000 heures à 250 °C), une bonne souplesse, une très bonne résistance au choc thermique et une température de thermoplasticité généralement comprise entre 400 et 500 °C.

On sait également que la plupart des polyimides aromatiques sont insolubles et infusibles et qu'il faut pour les mettre en œuvre employer des techniques qui passent soit par l'intermédiaire d'un polyamide-acide soluble non cyclisé, soit par un mélange de réactifs monomères fusibles qui, par un traitement thermique approprié, peut donner un matériau polymère.

Dans la première technique, le polyimide est préparé en deux étapes successives. Au cours de la première étape, une réaction entre une diamine aromatique et un dianhydride d'acide tétracarboxylique dans un solvant polaire aprotique conduit à une solution de polyamide-acide de haute masse moléculaire. Comme les propriétés du polyimide final (souplesse, thermoplasticité et stabilité thermique) sont d'autant plus élevées que la masse moléculaire est grande, il est impératif d'utiliser des solvants et des réactifs très purs. Les monomères doivent en outre être employés en proportions stœchiométriques. Les polyamide-acides de forte masse moléculaire donnent cependant des solutions extrêmement visqueuses, ce qui limite la concentration en matière sèche à des valeurs comprises entre 10 et 15 % en poids. Malgré cette faible concentration, la viscosité dynamique des solutions atteint facilement 20 000 à 50 000 mPa · s.

Pour les applications comme couches de protection, où l'épaisseur du revêtement en polyimide est de quelques micromètres, une faible concentration en polymère n'est pas rédhibitoire, mais lorsqu'il s'agit d'obtenir un dépôt de plusieurs dizaines de micromètres, il faut envisager de procéder à de nombreux passages dans la solution d'enduction avant d'obtenir l'épaisseur désirée.

La seconde étape du processus de fabrication consiste à utiliser la solution contenant généralement 10 à 15 % en poids de polyamide-acide pour préparer un film de polymère par évaporation progressive du solvant. La transformation du polyamide-acide en film de polyimide est effectuée par déshydratation thermique ou chimique.

Cette technique générale de préparation des polyimides est décrite notamment dans FR-A-1.239.491 et 1.256.203. Dans le second de ces brevets, un exemple décrit l'utilisation des polyimides comme vernis d'émaillage pour les conducteurs électriques. Selon cet exemple, le dianhydride pyroméllitique est mis en réaction avec l'éther de bis-(p-aminophényle) en solution dans le diméthylacétamide, pour préparer un polyamide-acide ayant une viscosité inhérente de 1,1 dl/g. Pour être utilisable sur une machine d'enduction, la concentration en polymère est ramenée à 11 % (en poids) et il faut procéder à 10 passages successifs dans la solution d'émaillage pour obtenir un accroissement de diamètre du fil qui est encore inférieur à 50 micromètres.

Une autre méthode connue de préparation des polyimides aromatiques consiste à remplacer les dianhydrides d'acides tétracarboxyliques par leurs produits de réaction sur les alcools aliphatiques primaires, c'est-à-dire par les diesters ou les tétraesters d'alkyle correspondants. Cette technique de polycondensation est décrite dans FR-A-1.360.488 et par V.L. Bell (Polymer Letters, 1967, 5, 941-946) pour les diesters d'alkyle des acides pyromellitiques et benzophénone tétracarboxylique-3,3',4,4' et diverses diamines aromatiques. Le mélange des monomères est transformé en polyimides par un chauffage progressif jusqu'à 275 ou 300 °C. Comme, après évaporation des solvants, la polycondensation s'effectue en phase solide, cette méthode est surtout utilisée pour préparer des adhésifs, des matériaux composites ou des vernis d'imprégnation, car les polyimides obtenus ont généralement une masse moléculaire assez faible et pas ou peu de souplesse.

Avec les diesters d'alkyle des acides cités précédemment, il n'est pas possible de procéder à une polycondensation en solution, car les polyimides sont obtenus sous forme d'oligomères de faible masse moléculaire, infusibles et insolubles dans les solvants de polymérisation, comme cela est montré dans les exemples comparatifs de FR-A-2.514.772.

On peut résumer de la manière suivante les avantages et les inconvénients des deux techniques de préparation des polyimides de l'art antérieur :

— la technique utilisant les dianhydrides se prête à l'obtention de fortes masses moléculaires, mais les solutions sont très diluées, ce qui est un inconvénient pour les applications sous forme de films ou de couches de protection ;

— la technique utilisant les diesters ou les tétraesters conduit très rapidement à des produits insolubles et il est impossible selon l'art antérieur d'obtenir des produits de haute masse en solution.

Le document antérieur FR-A-1.565.555 décrit une composition de précurseur de polyimide définie d'une manière générale comme comprenant, en solution dans un solvant organique inerte :

a) le précurseur proprement dit consistant essentiellement en un polymère aromatique linéaire du type polyamide-acide amique dérivant plus particulièrement d'un dianhydride d'acide tétracarboxylique et d'une diamine en excès et pouvant être représenté par la formule :

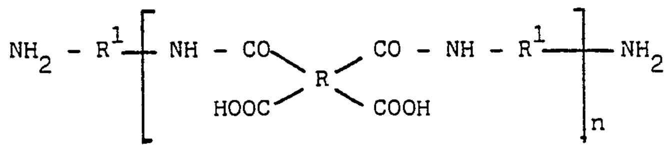

dans laquelle $R^1$ représente un radical hydrocarboné bivalent, $R^1$ un radical aromatique tétracarboxylique et le degré de condensation n correspond à 2 à 60 groupes amines terminaux pour 100 motifs du polymère ; et

b) un diester-diacide de formule

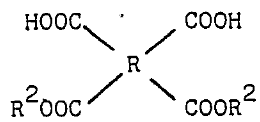

où R est défini comme précédemment et $R^2$ représente un radical hydrocarboné monovalent, ce diester-diacide étant présent plus particulièrement en une quantité correspondant sensiblement à la stœchiométrie des groupes amines terminaux du polymère précurseur.

Pour confectionner ce mélange précurseur, on opère en général

a) en ajoutant à un solvant organique inerte successivement une diamine $NH_2—R^1—NH_2$ et un dianhydride d'acide aromatique tétracarboxylique

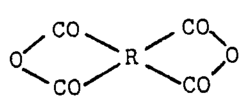

les proportions des réactifs étant telles que le degré de polycondensation du polyamide-acide amique obtenu en solution soit tel que défini plus haut (le calcul donne environ de 1,01 à 1,3 mole de diamine par mole de dianhydride) ; et

b) on ajoute une solution de diester-diacide, en proportion convenable.

Les compositions de précurseurs de polyimides du document antérieur sont essentiellement utilisées pour réaliser des revêtements isolants sur des fils métalliques. On procède à l'enduction du fil métallique par une solution de précurseur et à la transformation, par chauffage, du précurseur en polyimide.

On a maintenant découvert qu'il était possible d'améliorer les propriétés des revêtements de polyimides et l'invention propose à cet effet un procédé de préparation de compositions de précurseurs de polyimides qui comprend

a) une première étape, dans laquelle on met en réaction au sein d'un solvant, au moins une diamine aromatique biprimaire de formule générale

$$NH_2—Ar'—NH_2 \qquad (2)$$

et au moins un composé aromatique tétracarboxylique de formule générale

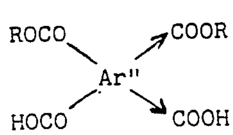

(3)

et

b) une deuxième étape dans laquelle on met en réaction avec le produit obtenu à l'issue de l'étape (a), au moins un dianhydride d'acide aromatique tétracarboxylique de formule générale

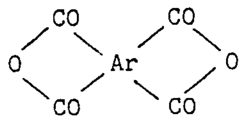

(1)

où Ar′ est un radical aromatique divalent formé d'un ou de plusieurs cycles et dont les deux valences sont sur des atomes de carbone distincts, non situés en position ortho ou péri ; Ar et Ar″ sont des radicaux aromatiques tétravalents formés d'un ou plusieurs cycles et dont les quatre valences sont sur des atomes de carbone distincts situés deux par deux en position ortho ou péri ; R est un atome d'hydrogène ou un radical hydrocarboné monovalent ; et les flèches indiquent les possibilités d'isomérie.

Les compositions de précurseurs de polyimides préparées d'après le procédé de l'invention ont une teneur en matière sèche élevée ; elles donnent, après traitement thermique, des revêtements de polyimides ayant une excellente souplesse, une température de thermoplasticité en général supérieure à 600 °C et une très bonne stabilité thermique, d'autant meilleure que les proportions des réactifs seront proches de la stœchiométrie.

Comme indiqué plus haut, la préparation des compositions de précurseurs de polyimides selon l'invention fait intervenir les réactifs suivants :

— au moins un dianhydride d'acide aromatique tétracarboxylique de formule générale

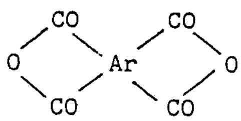

(1)

— au moins une diamine aromatique biprimaire de formule générale

$$NH_2—Ar'—NH_2 \qquad (2)$$

— et au moins un composé aromatique de formule générale

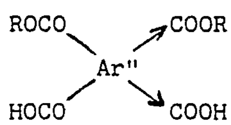

(3)

Dans ces formules, Ar et Ar″ sont des radicaux aromatiques tétravalents, carbocycliques ou hétérocycliques, dont les quatre valences sont sur des atomes de carbone distincts qui sont situés deux par deux en position ortho ou péri. Les radicaux Ar et Ar″ peuvent être formés d'un cycle ou de plusieurs cycles, qui sont alors accolés ou reliés entre eux, chaque cycle étant formé de préférence de 5 à 7 atomes dont une partie peut consister en atomes d'oxygène, de soufre et/ou d'azote.

Lorsque les radicaux Ar et Ar″ comportent plusieurs cycles reliés entre eux, les éléments de liaison sont par exemple la liaison simple ou l'un des atomes ou groupements suivants :

$$—O— ; —S— ; —SO— ; —SO_2— ; —CO— ; —CHOH— ; —CH_2— ; —CF_2— ; —C(CH_3)_2 ;$$

$$—C(CF_3)_2— ; —COO— ; —CONH— ; —CO—O—(CH_2)_x—O—CO— ; —Si(CH_3)_2— ;$$

$$—O—Si(CH_3)_2—O—.$$

Ar′ est un radical aromatique divalent, carbocyclique ou hétérocyclique, dont les deux valences sont sur des atomes de carbone distincts non situés en position ortho ou péri l'un par rapport à l'autre. Le radical Ar′ peut être formé d'un cycle ou de plusieurs cycles accolés ou reliés entre eux comme défini précédemment pour les radicaux Ar et Ar″.

R est un atome d'hydrogène ou un reste monovalent d'hydrocarbure renfermant de préférence de 1 à 13 atomes de carbone. En d'autre termes, le composé de formule (3) peut être un acide aromatique tétracarboxylique ou un bis(ortho-acide-ester) dérivé d'un acide aromatique tétracarboxylique. Dans ce dernier cas, on utilise le plus souvent le diester méthylique.

Les flèches indiquent les possibilités d'isomérie lorsque le radical R est différent de l'atome d'hydrogène.

Les compositions de précurseurs de polyimides préparées d'après le procédé de l'invention, obtenues à partir des composés chimiques de formules générales (1), (2) et (3) indiquées ci-dessus peuvent être représentées par la formule générale

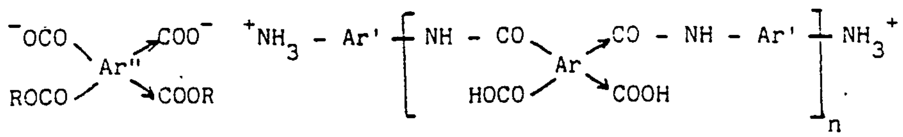

(4)

dans laquelle Ar, Ar', Ar'', R et les flèches ont la signification indiquée précédemment.

Dans cette formule, n est un nombre qui peut prendre toutes les valeurs de 1 à 2 000 et qui représente le degré de polymérisation. Le nombre n n'est pas accessible directement, mais sa valeur moyenne se déduit des proportions molaires des réactifs utilisées pour préparer les compositions considérées. Le plus souvent, n prend une valeur d'environ 5 à 100.

Parmi les composés tétracarboxyliques de formule (1) qui conviennent pour la préparation des précurseurs de polyimides selon la présente invention, on peut citer les dianhydrides des acides aromatiques suivants : les tétracarboxy-(1,2,3,4) et (1,2,4,5) benzènes, les acides phényl-3 et diphényl-3,6 pyromellitiques, les tétracarboxy-(1,2,5,6), (2,3,6,7), (1,2,4,5) et (1,4,5,8) naphtalènes, les tétracarboxy-(2,2',3,3') et (3,3',4,4') biphényles, le tétracarboxy-(3,4,9,10) pérylène, le bis(dicarboxy-3,4 phényl)-2,2 propane, le bis(dicarboxy-3,4 phényl) méthane, le bis(dicarboxy-3,4 phényl) éther, le bis(dicarboxy-3,4 phényl) sulfure, la bis(dicarboxy-3,4 phényl) sulfone, les tétracarboxy-(2,2',3,3') et (3,3',4,4') benzophénones, le tétracarboxy-(3,3',4,4') benzhydrol, le tétracarboxy-(1,8,9,10) phénanthrène, la tétracarboxy-(2,3,5,6) pyrazine, le tétracarboxy-(2,3,4,5) thiophène, le bis(dicarboxy-3,4 phényl)-2,2 hexafluoropropane, les bis(dicarboxy-3,4 benzoyl)-1,3 et (1,4) benzènes, le bis(dicarboxy-3,4 benzoyl)-4,4' diphényléther, les bis(dicarboxy-3,4 phénylhydroxyméthylène)-1,3 et (1,4) benzènes, le bis(dicarboxy-3,4 phényl) diméthylsilane, le tétracarboxy-(3,3',4,4') benzanilide, le bis(dicarboxy-3,4 phényl) difluorométhane et les bis(dicarboxy-3,4 phénoxy)-1,3 et (1,4) benzènes.

On citera aussi, à titre d'exemples de composés de formule (3), les tétra-acides eux-mêmes et les bis(ortho-acides-esters) d'alcoyle préparés par réaction des anhydrides sur les alcools aliphatiques, comme par exemple les esters de méthyle, d'éthyle, d'isopropyle, de n-butyle, de tert-butyle, de néopentyle, d'octyle et de dodécyle.

Parmi les diamines aromatiques primaires de formule (2) qui conviennent pour la préparation des précurseurs de polyimides selon la présente invention, on peut citer les diamino-(1,3) et (1,4) benzènes, les diamino-(2,4), (2,6) et (3,5) toluènes, les diaminoxylènes, les diamino-(3,3') et (4,4') diphénylméthanes, le bis(amino-4 méthyl-3 phényl) méthane, le bis(amino-4 phényl)-2,2 propane, le diamino-4,4' biphényle, la diméthyl-3,3' benzidine, la diméthoxy-3,3' benzidine, la dichloro-3,3' benzidine, les diamino-(3,3') et (4,4') diphényléthers, les diamino-(3,3') et (4,4') benzophénones, les diamino-(3,3') et (4,4') benzhydrols, le bis(amino-4 phényl) sulfure, la bis(amino-4 phényl) sulfone, la bis(amino-3 phényl) sulfone, les diamino-(3,3'), (3,4'), (3',4) et (4,4') benzanilides, le bis(amino-4 phényl) difluorométhane, les diamino-(3,3'), (3,4'), (3',4) et (4,4') benzoates de phényle, les bis(amino-3 et (4) phényl) diméthylsilanes, le bis(amino-4 phényl)-2,2 hexafluoropropane, les méta et para-aminophénoxy-(1,3) et (1,4) benzènes, les méta et para-aminobenzoyl-(1,3) et (1,4) benzènes et les méta et para-aminophényl hydroxyméthyl-(1,3) et (1,4) benzènes.

Comme le montre la formule générale (4), les compositions de l'invention ont une structure moléculaire formée d'un polyamide-acide α,ω-diaminotéléchélique, dont les fonctions amines terminales sont salifiées par le réactif latent de formule générale (3). Ce réactif est pratiquement inerte à basse température, le sel d'amine ayant une bonne stabilité jusqu'à une centaine de degrés C. Par contre, au moment de la mise en œuvre des compositions de précurseurs de polyimides, il y a, avec effet retard, réaction de ce composé sur les fonctions amines terminales du polyamide-acide et la polycondensation se poursuit avec formation de cycles imides lorsque la température est supérieure à 100 °C et de préférence comprise entre 120 et 400 °C.

Dans le mode de mise en œuvre, on prépare les compositions de résines en dissolvant dans un solvant approprié d'abord le réactif latent de formule (3), puis la diamine aromatique de façon à former les sels d'amine. On peut arriver au même résultat en inversant l'ordre d'addition de ces deux réactifs. La réaction de salification se traduit par une légère augmentation de la température du milieu réactionnel. Lorsque cette première opération est terminée, le dianhydride de formule (1) est ajouté progressivement pour éviter une forte augmentation de température. Il est préférable de refroidir le réacteur pour maintenir la température de la solution entre 5 et 40 °C pour éviter la formation incontrôlée de cycles imides. Après quelques heures d'agitation, la concentration de la solution est éventuellement ajustée à la valeur désirée par addition d'un solvant identique ou différent du solvant de base.

Parmi les solvants qui conviennent pour la préparation des précurseurs de polyimides de la présente invention, on peut citer le diméthylformamide, le diméthylacétamide, le diéthylacétamide, le diméthylsulfoxyde, la N-méthylpyrrolidinone-2, le N-méthylcaprolactame, la diméthylsulfone, la tétraméthylurée, la tétraméthylènesulfone, la N-acétylpyrrolidinone-2, la butyrolactone, l'hexaméthylphosphoramide et de

nombreux solvants aprotiques polaires. Il est possible d'utiliser ces solvants isolément ou en combinaison, mais il est également possible de les utiliser en combinaison avec d'autres solvants organiques qui ne sont généralement pas des solvants des polyamide-acides, tels que par exemple le benzène, le toluène, les xylènes, les solvants naphta, le chlorobenzène, les éthers et esters de l'éthylèneglycol, du di- et du triéthylèneglycol, le dioxanne, le tétrahydrofuranne, le cyclohexane, etc...

On a indiqué précédemment que la réaction de formation des compositions de précurseurs de polyimides nécessitait l'utilisation de quantités de réactifs très proches de la stœchiométrie théorique de la réaction. Comme il y a deux sortes de réactifs de type acide qui sont mis en réaction avec une diamine aromatique, avec deux modes de réaction différents, il faut définir ce que l'on entend par quantités stœchiométriques.

La stœchiométrie globale de la réaction consiste à engager un nombre de fonctions amines sensiblement égal au nombre de centres réactifs acides ortho-difonctionnels provenant soit du réactif latent de formule (3), soit du dianhydride de formule (1). Plus précisément, pour un centre réactif ortho-difonctionnel provenant de l'un et l'autre des réactifs précédents, on utilise de préférence au total de 0,9 à 1,1 fonction amine. Les meilleurs résultats sont obtenus avec une proportion comprise entre 0,98 et 1,02 fonction amine primaire.

Les proportions respectives des composés de formule (1) et (3) qui sont introduites dans les compositions de l'invention sont en grande partie déterminées par la nature de l'application envisagée. Ces proportions jouent en effet un rôle important sur la masse moléculaire du polyamide-acide $\alpha,\omega$-diaminotéléchélique intermédiaire et par conséquent sur l'ensemble des propriétés viscosimétriques de la solution. Le composé de formule (3) représente de 0,05 à 50 moles pour 100 moles de l'ensemble des composés de formules (1) et (3).

Selon l'application prévue, on peut utiliser, pour 100 moles de centres réactifs acides ortho-difonctionnels, par exemple de 1 à 15 moles de réactif latent de formule (3) et le complément à 100, soit de 99 à 85 moles de dianhydride (1), qui seront mis en réaction, comme il a été dit précédemment, avec 90 à 110 et de préférence 98 à 102 moles de diamine aromatique primaire.

Lorsque l'on met en jeu une proportion relativement élevée de réactif latent de formule (3), par exemple de 10 à 15 % en moles, la viscosité inhérente du polymère est de l'ordre de 0,35 à 0,55 dl/g et, pour une concentration en matière sèche de 25 à 30 % en poids, la solution a une viscosité dynamique de l'ordre de 5 000 à 7 000 mPa · s à 25 °C. Ce genre de composition se prête particulièrement bien aux applications comme vernis d'imprégnation ou comme couches adhésives.

Pour la fabrication de revêtements isolants sur des surfaces métalliques, on prépare des compositions contenant au plus 10 % et de préférence de 4 à 10 % en moles de réactif latent (3) et au moins 90 % de préférence de 96 à 90 % de dianhydride (1). Enfin, pour l'émaillage des conducteurs électriques ou des fils magnétiques, les compositions sont préparées avec de préférence de 2 à 7 % en moles de réactif latent (3) et de 98 à 93 % de dianhydride (1). La viscosité inhérente des polymères est alors comprise entre 0,5 et 1,2 dl/g et, selon la concentration en matière sèche qui peut varier de 15 à 25 %, on obtient des solutions dont la viscosité dynamique est comprise entre 2 000 et 10 000 mPa · s.

Les compositions de précurseurs de polyimides ont été définies comme étant des sels carboxyliques de polyamide-acide préparées à partir d'au moins trois composés de formules générales (1), (2) et (3). Toute composition préparée avec deux ou plusieurs agents latents (3), diamines biprimaires (2), ou dianhydrides (1) différents entre également dans le cadre de l'invention. Il peut être en effet utile d'utiliser plusieurs diamines ou plusieurs dianhydrides pour préparer des copolymères statistiques ou pseudo-séquencés de façon à modifier les propriétés rhéologiques, mécaniques ou thermiques des produits ou même pour en abaisser le coût de fabrication.

La présente invention concerne également l'utilisation des compositions de résines telles que décrites précédemment pour réaliser des revêtements isolants, des films, des vernis d'imprégnation ou d'émaillage ayant des propriétés de souplesse, d'adhérence sur les substrats, de résistance à la chaleur et au choc thermique très élevées. Ces matériaux sont fabriqués par les techniques conventionnelles d'enduction à partir de solutions dont la viscosité a été ajustée pour s'adapter au système de mise en œuvre. Après évaporation du ou des solvants, les réactions de polycondensation des réactifs à effet retard et de formation des cycles imides sont effectuées par chauffage à une température supérieure à 100 °C et de préférence comprise entre 120 et 400 °C.

L'invention sera décrite de façon plus précise en liaison avec les exemples spécifiques ci-après dans lesquels les détails sont donnés à titre illustratif et non limitatif. Dans ces exemples, les réactions de formation des polymères sont effectuées sous agitation et en atmosphère inerte pour éviter l'oxydation des amines aromatiques. L'exemple 1 réalisé à partir de la technique connue de préparation des vernis de polyamide-acide est donné à titre comparatif.

Dans tous les exemples, les abréviations C, VI et VD représentent respectivement la concentration en matière sèche sous forme de pourcentage pondéral, la viscosité inhérente en dl/g et la viscosité dynamique en mPa · s.

Les viscosités inhérentes sont mesurées à 30 °C pour une concentration de 5 g de résine dans 1 litre de N-méthyl-pyrrolidinone-2 (NMP). Les viscosités dynamiques des solutions sont mesurées à 25 °C avec un viscosimètre à système cône/plan de type Haake-Rotovisco.

Pour simplifier l'écriture des noms de produits chimiques, des mélanges de composés isomères sont

désignés par un terme au singulier comme par exemple le diester de méthyle de l'acide pyromellitique.

Les noms des produits chimiques utilisés dans les exemples sont désignés par les sigles suivants :

pour les solvants : NMP : N-méthylpyrrolidinone, DMAC : diméthylacétamide ;

pour les diamines : BZ : benzidine ; DMMDA : bis(amino-4 méthyl-3 phényl) méthane ; MDA : bis(amino-4 phényl) méthane ; MPDA : métaphénylènediamine, ODA : bis(amino-4 phényl) éther ; PPDA : paraphénylènediamine ;

pour les dianhydrides des acides tétracarboxyliques : BPTDA : biphényle-3,3',4,4' ; BTDA : benzophénone-3,3',4,4' ; DPEDA : diphényléther-3,3',4,4' ; HFTDA : hexafluoropropylidène-2,2 bis(phényl-3,4) ; PMDA : benzène-1,2,4,5 ; enfin,

pour les diesters de méthyle des acides tétracarboxyliques : BHTDE : benzhydrol-3,3',4,4' ; BTDE : benzophénone-3,3',4,4' ; PMDE : pyromellitique.

## Exemple 1 (comparatif)

A une solution de 8,009 g (0,04 mole) de bis(amino-4 phényl) éther (ODA) dans 94,83 g de NMP, on ajoute peu à peu 8,725 g (0,04 mole) de PMDA. Après 15 heures de réaction à 20 °C, la solution de polyamide-acide a les caractéristiques suivantes : C = 15 %, VI = 2,45, VD = 240 000.

Cette solution est beaucoup trop visqueuse pour être utilisable sous cette forme. Par addition de solvant, sa concentration est ramenée à 9,5 % pour obtenir une viscosité dynamique de 7 200.

Lorsqu'elle est utilisée pour émailler du fil de cuivre, la solution de vernis ainsi préparée nécessite 12 passages pour atteindre une augmentation de diamètre de l'ordre de 50 micromètres.

## Exemple 2

Dans un réacteur contenant 530 g de NMP, on ajoute 7,184 g ($18,5\ 10^{-3}$ mole) de BHTDE puis, après dissolution, 74,09 g ($370\ 10^{-3}$ mole) d'ODA.

Avec un introducteur à poudre à vis sans fin, on ajoute ensuite progressivement 76,671 g ($351,5\ 10^{-3}$ mole) de PMDA, en maintenant la température entre 15 et 20 °C. Après 15 heures de réaction, la solution diluée avec un peu de solvant a les propriétés suivantes : C = 22,5 %, VI = 0,58, VD = 4 800. Valeur calculée du degré de polymérisation n = 19.

## Exemples 3 à 8

Après les réactifs utilisés dans l'exemple 2, on prépare une série de compositions en faisant varier les proportions respectives des constituants comme indiqué dans le tableau 1. On donne au tableau 1 les valeurs de C, de VI, de VD et la valeur calculée de n.

Tableau 1

| Exemple n° | BHTDE | | ODA | | PMDA | | C | VI | VD | n |
|---|---|---|---|---|---|---|---|---|---|---|
| | g | $10^{-3}$ mole | g | $10^{-3}$ mole | g | $10^{-3}$ mole | %poids | dl/g | mPa.s | |
| 3 | 6,854 | 17,6 | 50,06 | 250 | 52,89 | 242,5 | 17,1 | 0,88 | 6200 | 13,8 |
| 4 | 35,91 | 92,5 | 460,46 | 2299,5 | 481,62 | 2208 | 21 | 0,63 | 5000 | 23,9 |
| 5 | 35,91 | 92,5 | 460,46 | 2299,5 | 481,62 | 2208 | 20,4 | 0,63 | 3400 | 23,9 |
| 6 | 3,106 | 8,0 | 32,039 | 160 | 33,155 | 152 | 20 | 0,57 | 3600 | 19 |
| 7 | 6,213 | 16,0 | 32,039 | 160 | 31,41 | 144 | 25 | 0,42 | 5000 | 9 |
| 8 | 9,32 | 24,0 | 32,039 | 160 | 29,665 | 136 | 27 | 0,42 | 6800 | 5,7 |

## Exemple 9

Dans les conditions de l'exemple 2, on prépare une composition en faisant réagir successivement 2,26 g ($8 \cdot 10^{-3}$ mole) de PMDE, 32,04 g ($160 \cdot 10^{-3}$ mole) d'ODA et 33,16 g ($152 \cdot 10^{-3}$ mole) de PMDA. Après 20 heures de réaction, les valeurs obtenues sont : C = 20 %, VI = 0,62 et VD = 3 500. Valeur calculée de n = 19.

Exemple 10

On fait réagir dans 580 g de DMAC, 5,503 g ($14 \cdot 10^{-3}$ mole) de BHTDE avec 77,325 g ($390 \cdot 10^{-3}$ mole) de MDA et 80,816 g ($370,5 \cdot 10^{-3}$ mole) de PMDA. La composition formée a les caractéristiques suivantes : C = 22,1 %, VI = 0,76 et VD = 3 030. Valeur calculée de n = 26,5.

Exemples 11 à 14

Dans les conditions de l'exemple 2, on fait réagir 1,411 g ($5 \cdot 10^{-3}$ mole) de PMDE avec la quantité de la diamine indiquée dans le tableau 2 (correspondant à 0,100 mole) et ensuite on ajoute peu à peu 20,72 g ($95 \cdot 10^{-3}$ mole) de PMDA. Les propriétés de ces compositions sont indiquées dans le tableau 2. La valeur calculée de n est dans chaque cas de 19.

Tableau 2

| Exemple n° | Diamine | Poids en (g) | C (% poids) | VI (dl/g) | VD (mPa.s.) |
|---|---|---|---|---|---|
| 11 | MPDA | 10,815 | 22 | 0,65 | 3150 |
| 12 | PPDA | 10,815 | 21,8 | 0,71 | 4120 |
| 13 | DMMDA | 22,633 | 23,1 | 0,74 | 3610 |
| 14 | BZ | 18,424 | 20,9 | 0,68 | 3820 |

Exemples 15 à 18

On fait réagir dans les mêmes conditions 1,941 7 g ($5 \cdot 10^{-3}$ mole) de BHTDE et 20,024 g (0,100 mole) d'ODA avec la quantité de dianhydride indiquée dans le tableau 3 (correspondant à $95 \cdot 10^{-3}$ mole) pour préparer une série de compositions ayant les propriétés indiquées dans le même tableau. La valeur calculée de n est dans chaque cas de 19.

Tableau 3

| Exemple n° | Diamine | Poids en (g) | C (% poids) | VI (dl/g) | VD (mPa.s.) |
|---|---|---|---|---|---|
| 15 | BTDA | 30,612 | 20 | 0,68 | 4030 |
| 16 | BPTDA | 27,951 | 19,5 | 0,72 | 5025 |
| 17 | DPEDA | 29,471 | 21,9 | 0,69 | 3080 |
| 18 | HFTDA | 42,204 | 22,1 | 0,66 | 3110 |

Exemple 19

On met dans un réacteur 252,8 de NMP et 63 g de DMAC pour faire un mélange solvant, auquel on ajoute, dans l'ordre, 19,827 g (0,100 mole) de MDA et 20,024 g (0,100 mole) d'ODA, puis, après dissolution, 2,704 g ($7 \cdot 10^{-3}$ mole) de BTDE. On ajoute ensuite peu à peu 21,813 g (0,100 mole) de PMDA et 29,968 g ($93 \cdot 10^{-3}$ mole) de BTDA. Après 24 heures de réaction à température ambiante, la composition a les valeurs suivantes : C = 23 %, VI = 0,565, VD = 6 240. Valeur calculée de n = 27,6.

Exemples 20 à 30

Certaines des compositions des exemples précédents sont étendues sur une feuille de cuivre de 0,2 mm d'épaisseur à l'aide d'un applicateur de façon à obtenir, après évaporation du solvant, une couche d'émail de 0,025 mm d'épaisseur et 2 cm de largeur. On apprécie ensuite le comportement du vernis lorsqu'il a été traité pendant 1 heure à 150 °C, 1 heure à 200 °C, 1 heure à 250 °C et 1 heure à 300 °C. L'adhérence et la souplesse sont étudiées d'une part en soumettant la feuille de métal à un effort de traction, jusqu'à la rupture du métal et d'autre part en pliant la feuille à 90° puis à 180°. Si le vernis supporte sans fissures ni perte d'adhérence une pliure à 90°, il est considéré comme bon (B) et à 180° comme très bon (TB). S'il apparaît quelques rares fissures, il est considéré comme assez bon (AB) et dans tous les autres cas comme mauvais.

Tableau 4

| Exemple n° | Composition de l'exemple n° | Adhérence | Souplesse |
|---|---|---|---|
| 20 | 2 | TB | TB |
| 21 | 3 | TB | TB |
| 22 | 4 | TB | TB |
| 23 | 5 | TB | TB |
| 24 | 7 | B | B |
| 25 | 8 | AB | M |
| 26 | 9 | TB | TB |
| 27 | 10 | B | B |
| 28 | 14 | TB | TB |
| 29 | 15 | TB | TB |
| 30 | 19 | TB | TB |

Exemples 31 à 45

Certaines des compositions des exemples précédents sont utilisées pour émailler du fil de cuivre de 1 mm de diamètre en 8 passages à la vitesse de 9 mètres/minute, de façon à avoir, après passage dans le four, une surépaisseur de 0,070 mm. La thermoplasticité de la couche d'émail est ensuite mesurée selon la norme française NF-C31-462. La souplesse est mesurée en étirant le fil émaillé de 0 à 30 % de sa longueur initiale et en l'enroulant ensuite autour de son propre diamètre. S'il n'y a aucune fissuration il est considéré comme très bon pour l'allongement considéré. Les résultats sont réunis dans le tableau 5.

(Voir Tableau 5 p. 10)

Tableau 5

| Exemple n° | Composition de l'exemple n° | Température de thermoplasticité (°C) | Souplesse de l'émail |
|---|---|---|---|
| 31 | 2 | > 600 | TB 25 % |
| 32 | 3 | > 600 | TB 25 % |
| 33 | 4 | > 600 | TB 20 % |
| 34 | 6 | > 600 | TB 20 % |
| 35 | 7 | > 600 | B 10 % |
| 36 | 9 | > 600 | TB 25 % |
| 37 | 10 | 580 | B 15 % |
| 38 | 11 | 600 | TB 20 % |
| 39 | 12 | > 600 | TB 15 % |
| 40 | 14 | > 600 | TB 15 % |
| 41 | 15 | 540 | TB 25 % |
| 42 | 16 | > 600 | TB 25 % |
| 43 | 17 | 470 | TB 25 % |
| 44 | 18 | 380 | TB 25 % |
| 45 | 20 | 600 | TB 25 % |

## Revendications

1. Procédé de préparation d'une composition de précurseur de polyimide, caractérisée en ce qu'il comprend

a) une première étape, dans laquelle on met en réaction au sein d'un solvant, au moins une diamine aromatique biprimaire de formule générale

$$NH_2—Ar'—NH_2 \quad (2)$$

et au moins un composé aromatique tétracarboxylique de formule générale

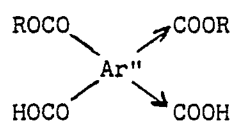

(3)

et

b) une deuxième étape dans laquelle on met en réaction avec le produit obtenu à l'issue de l'étape (a), au moins un dianhydride d'acide aromatique tétracarboxylique de formule générale

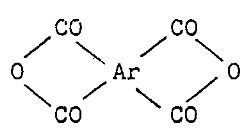

(1)

où Ar' est un radical aromatique divalent formé d'un ou de plusieurs cycles et dont les deux valences sont sur des atomes de carbone distincts, non situés en position ortho ou péri ; Ar et Ar" sont des radicaux aromatiques tétravalents formés d'un ou plusieurs cycles et dont les quatre valences sont sur des atomes de carbone distincts situés deux par deux en position ortho ou péri ; R est un atome d'hydrogène ou un radical hydrocarboné monovalent ; et les flèches indiquent les possibilités d'isomérie ; les proportions des réactifs étant de 0,05 à 50 moles de composé de formule (3) et de 90 à 110 moles de composé de formule (2) pour 100 moles de l'ensemble des composés de formules (1) et (3).

2. Procédé selon la revendication 1, caractérisée en ce que R représente un atome d'hydrogène.

3. Procédé selon la revendication 1, caractérisée en ce que R représente un radical hydrocarboné de 1 à 13 atomes de carbone.

4. Procédé selon la revendication 3, caractérisée en ce que R représente un radical méthyle.

5. Procédé selon l'une des revendications 1 à 4, caractérisée en ce que, dans la seconde étape (b), on maintient la température à une valeur de 5 à 40 °C.

6. Procédé selon l'une des revendications 1 à 5, caractérisée en ce que l'on met en jeu de 1 à 15 moles de composé de formule (3) pour 100 moles de l'ensemble des composés de formules (1) et (3).

**Claims**

1. A process for manufacturing a polyimide precursor composition, characterized in that it comprises

a) a first step in which at least one biprimary aromatic diamine of general formula :

$$NH_2—Ar'—NH_2 \quad (2)$$

and at least one tetracarboxylic aromatic compound of general formula :

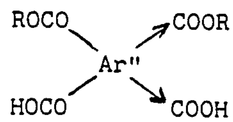

(3)

are reacted within a solvent and

b) a second step in which the product obtained in step (a) is reacted with at least one dianhydride of tetracarboxylic aromatic acid of general formula :

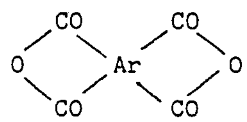

(1)

wherein Ar' is a divalent aromatic radical formed of one or more rings and the two valencies of which are on separate carbon atoms, not in ortho or peri position ; Ar and Ar" are tetravalent aromatic radicals formed of one or more rings and the four valencies of which are on separate carbon atoms placed by pairs in ortho or peri position ; R is a hydrogen atom or a monovalent hydrocarbon radical, and the arrows indicate the isomerism possibilities ; the reactants proportions being from 0.05 to 50 moles of compound of formula (3) and 90 to 110 moles of compound of formula (2) per 100 moles of all the compounds of formulas (1) and (3).

2. A process according to claim 1, characterized in that R is a hydrogen atom.

3. A process according to claim 1, characterized in that R' is a hydrocarbon radical of 1 to 13 carbon atoms.

4. A process according to claim 3, characterized in that R is a methyl radical.

5. A process according to one of claims 1 to 4, characterized in that, in the second step (b), the temperature is maintained between 5 and 40 °C.

6. A process according to one of claims 1 to 5, characterized in that 1 to 15 moles of compound of formula (3) are used for 100 moles of all the compounds of formulas (1) and (3).

**Patentansprüche**

1. Verfahren zur Herstellung einer Polyimidvorstufenzusammensetzung, dadurch gekennzeichnet, daß es umfasst

a) eine erste Stufe, in der man zusammen mit einem Lösungsmittel mindestens ein aromatisches biprimäres Diamin der allgemeinen Formel

$$NH_2—Ar'—NH_2 \quad (2)$$

und mindestens eine aromatische Tetracarboxylverbindung der allgemeinen Formel

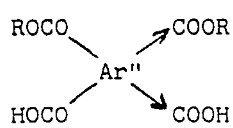

(3)

zur Reaktion bringt, und

b) eine zweite Stufe, in der man mit dem nach Durchführung der Stufe (a) erhaltenen Produkt mindestens ein aromatisches Tetracarboxyl-säuredianhydrid der allgemeinen Formel

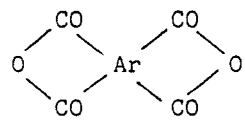

(1)

zur Reaktion bringt, wobei bedeuten : Ar′ einen divalenten aromatischen Rest, der aus einem oder mehreren Ringen gebildet ist und dessen zwei Valenzen sich auf unterschiedlichen Kohlenstoffatomen, die nicht in ortho- oder peri-Stellung liegen, befinden ; Ar und Ar″ tetravalente aromatische Reste, die aus einem oder mehreren Ringen gebildet sind und deren vier Valenzen sich auf unterschiedlichen Kohlenstoffatomen, die jeweils zu zweit in ortho- oder peri-Stellung liegen, befinden ; R ein Wasserstoffatom oder einen monovalenten Kohlenwasserstoffrest ; und wobei die Pfeile die Isomerie-Möglichkeiten anzeigen ; wobei die Mengen an Reaktionspartnern 0,05 bis 50 Mol der Verbindung der Formel (3) und 90 bis 110 Mol der Verbindung der Formel (2) pro 100 Mol der Gesamtmenge der Verbindungen der Formeln (1) und (3) betragen.

2. Verfahren nach Anspruch 1, dadurch gekennzeichnet, daß R ein Wasserstoffatom bedeutet.

3. Verfahren nach Anspruch 1, dadurch gekennzeichnet, daß R einen Kohlenwasserstoffrest mit 1 bis 13 Kohlenstoffatomen bedeutet.

4. Verfahren nach Anspruch 3, dadurch gekennzeichnet, daß R einen Methylrest bedeutet.

5. Verfahren nach einem der Ansprüche 1 bis 4, dadurch gekennzeichnet, daß man in der zweiten Stufen (b) die Temperatur bei einem Wert von 5 bis 40 °C hält.

6. Verfahren nach einem der Ansprüche 1 bis 5, dadurch gekennzeichnet, daß man 1 bis 15 Mol der Verbindung der Formel (3) pro 100 Mol der Gesamtmenge der Verbindungen der Formeln (1) und (3) einsetzt.